# EUROPÄISCHE PATENTSCHRIFT

(11) **EP 2 667 041 B1**
(45) Veröffentlichungstag und Bekanntmachung des Hinweises auf die Patenterteilung: **03.06.2020**
(21) Anmeldenummer: 13162646.7
(22) Anmeldetag: 08.04.2013
(51) Int. Cl.: F16B 5/02

(54) **Befestigungssatz für ein Faserverbundbauteil**
Fastening set for a composite fibre component
Ensemble de fixation pour un élément composite en fibre

(30) Priorität: 21.05.2012 DE 102012208467
(43) Veröffentlichungstag der Anmeldung: 27.11.2013
(73) Patentinhaber: Bayerische Motoren Werke Aktiengesellschaft, 80809 München (DE)
(72) Erfinder: Brauch, Michael, 85598 Baldham (DE); Eroglu, Oguzhan, 88400 Biberach (DE); Wolfinger, Susanne, 85567 Grafing-Bahnhof (DE)

(56) Entgegenhaltungen:
- DE-A1- 2 412 774
- DE-A1-102005 041 350
- DE-A1-102009 023 032
- DE-U1-202005 019 958
- FR-A1- 2 554 522
- US-A- 5 028 190
- US-A- 5 180 267

## Beschreibung

Die Erfindung bezieht sich auf einen Befestigungssatz für ein Faserverbundbauteil, mit einem Befestigungselement, bestehend aus einem in eine Durchgangsbohrung des Faserverbundbauteils einführbaren und mit einem von der Bauteilvorderseite aus einsetzbaren Schraubelement verbindbaren Schaft und einem auf der Bauteilrückseite erweiterten Flansch, nach dem Oberbegriff des Patentanspruchs 1 bzw. 4.

Bei bekannten Befestigungen dieser Art (DE 10 2005 041 350 A1, DE 10 2009 023 032 A1) wird das Befestigungselement auf Seiten des Flanschabschnitts zunächst mit dem Faserverbundbauteil verklebt, verschweißt oder vernietet, damit es dreh- und verschiebefest am Bauteil fixiert ist, wenn der Befestigungssatz dann durch Eindrehen des Schraubelements komplettiert wird.

Aufgabe der Erfindung ist es, einen Befestigungssatz der eingangs genannten Art so auszubilden, dass die Montage wesentlich erleichtert wird.

Diese Aufgabe wird erfindungsgemäß durch den im Patentanspruch 1 bzw. 4 gekennzeichneten Befestigungssatz gelöst.

Erfindungsgemäß wird auf eine montagemäßig aufwändige, dauerhafte Verbindung und insbesondere Verklebung des Flanschabschnitts mit der Bauteilrückseite verzichtet und stattdessen das Befestigungselement nach der ersten Lösungsvariante der Erfindung an der Bauteilvorderseite in Ansetzrichtung des Schraubelements formschlüssig abgestützt, wodurch der Einbau des Befestigungssatzes erheblich vereinfacht und sich dieser im Bedarfsfall durch Lösen des Formschlusses zusätzlich auch problemlos auswechseln lässt, mit dem weiteren wesentlichen Aspekt, dass das Befestigungselement aufgrund der speziellen Querschnittsgeometrie des Schaftabschnitts und der zugehörigen Faserverbundbohrung nicht nur die zum Festziehen des Schraubelements erforderliche Verdrehsicherung aufweist, sondern in Verbindung mit der formschlüssig gleitenden Abstützung an der Bauteilvorder- und -rückseite zugleich auch quer zur Längsachse verschieblich in der Durchgangsbohrung des Faserverbundbauteils angeordnet ist und sich dadurch eine fertigungsbedingte Fehlpositionierung der Durchgangsbohrung des Faserverbundbauteils und/oder des mit diesem zu verbindenden Einbauteils auf baulich einfache Weise korrigieren lässt, bis der Befestigungssatz dann im endgültig verschraubten Zustand lagefest mit dem Faserverbundbauteil verspannt ist.

In weiterer, bau- und montagemäßiger Vereinfachung ist das Befestigungselement am einschraubseitigen Schaftende vorzugsweise über elastisch verformbare, am Randbereich der Durchgangsbohrung verrastete Schnapphaken mit dem Faserverbundbauteil verbunden, wobei die Schnapphaken im Falle eines eindimensionalen Toleranzfeldes in einbaugünstiger Weise unmittelbar mit den in Verschieberichtung verlaufenden Bohrungsrändern zusammenwirken, während bei einem zweidimensionalen Toleranzfeld, bei dem das Befestigungselement in beiden Richtungen verschieblich und begrenzt winkelbeweglich in der Durchgangsbohrung angeordnet ist, zweckmäßigerweise eine die Durchgangsbohrung im Verschiebebereich des Befestigungselements gleitend überdeckende Sicherungsscheibe zwischen den Bohrungsrand und die Schnapphaken eingefügt ist.

Alternativ zur ersten Lösungsvariante enthält das Befestigungselement erfindungsgemäß einen ungelochten Schaftabschnitt aus einem auf ein selbstschneidendes Schraubelement abgestimmten Material und die Querschnittsfläche des Schaftabschnitts beträgt ein Vielfaches des Schraubdurchmessers, so dass der Befestigungssatz wiederum einen zumindest eindimensionalen Toleranzbereich aufweist, in welchem sich das Schraubelement und über dieses ein entsprechendes Gegenbauteil lastfest mit dem Faserverbundbauteil verbinden lässt, wobei auch in diesem Fall das Befestigungselement unter Verzicht auf eine flanschseitige Verklebung oder eine andere dauerhafte Befestigung vorzugsweise am einschraubseitigen Schaftende über elastisch verformbare Schnapphaken formschlüssig und somit im Bedarfsfall auswechselbar am Faserverbundbauteil verrastet und durch eine nicht-kreisförmige Querschnittsgeometrie des Schaftabschnitts und der Durchgangsbohrung formschlüssig verdrehsicher im Faserverbundbauteil angeordnet ist.

Aus Fertigungsgründen schließlich ist das Befestigungselement einschließlich der Schnapphaken zweckmäßigerweise einstückig aus Kunststoff hergestellt.

Die Erfindung wird nunmehr anhand mehrerer Ausführungsbeispiele in Verbindung mit den Zeichnungen näher erläutert. Es zeigen in stark schematisierter Darstellung:
- **Fig. 1a,b**: einen nach der ersten Variante der Erfindung ausgebildeten Befestigungssatz im Längs- (a) und im Querschnitt (b) mit einem zweidimensionalen Toleranzfeld;
- **Fig. 2**: eine der Fig. 1b entsprechende Darstellung des Befestigungssatzes gemäß Fig. 1 mit einem modifizierten, eindimensionalen Toleranzbereich; und
- **Fig. 3a,b**: einen nach der zweiten Variante der Erfindung ausgebildeten Befestigungssatz im Längs- (a) und im Querschnitt (b) mit einem zweidimensionalen Toleranzfeld.

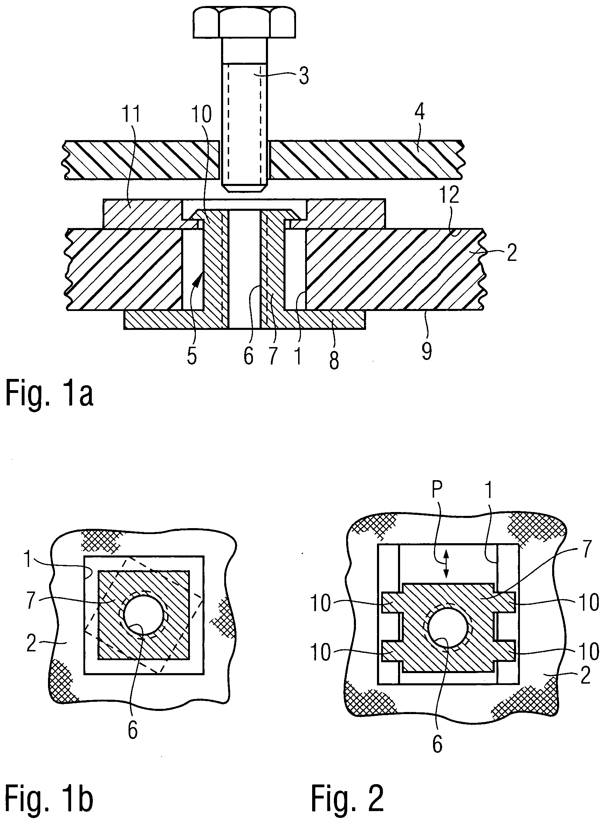

Der in den Fign. 1 und 2 gezeigte Befestigungssatz ist in einer Durchgangsbohrung 1 eines Faserverbundbauteils 2 positioniert und dient dazu, ein Schraubelement 3 und über dieses z. B. ein An- oder Gegenbauteil 4 mit dem Faserverbundbauteil 2 zu verbinden. Zu diesem Zweck enthält der Befestigungssatz ein einstückig aus Kunststoff gefertigtes Befestigungselement 5 mit einem mit einer zentralen Aufnahmebohrung 6 für das Schraubelement 3 versehenen Schaftabschnitt 7 und einem an dem dem Einschraubende gegenüberliegenden Schaftende angeformten, erweiterten Flanschabschnitt 8.

Gemäß Fig. 1 besitzt die Durchgangsbohrung 1 einen nicht-kreisförmigen, nämlich vorzugsweise rechteckigen Bohrungsquerschnitt und der Schaftabschnitt 7 des Befestigungselements 5 eine konforme, allseitig jedoch deutlich kleinere Querschnittsgeometrie, so dass das Befestigungselement 5 in der Durchgangsbohrung 1 der Spaltgröße zwischen Durchgangsbohrung 1 und Schaftabschnitt 7 entsprechend quer zur Schaftachse in beiden Richtungen verschieblich ist. Dabei sind die Querschnittsgeometrien von Durchgangsbohrung 1 und Schaftabschnitt 7 so gewählt, dass der Schaftabschnitt 7 unabhängig von seiner Querlage in der Durchgangsbohrung 1 immer nur winkelbegrenzt verdrehbar ist, wie dies in Fig. 1b durch die gestrichelte Winkellage des Schaftabschnitts 7 angedeutet ist.

Zum Einbau des Befestigungssatzes wird das Befestigungselement 5 mit dem Schaftabschnitt 7 von der Bauteilrückseite 9 aus in die Durchgangsbohrung 1 eingeschoben und durch am vorderen Schaftende angeformte Schnapphaken 10 an einer Sicherungsscheibe 11 verrastet, welche den Schaftabschnitt 7 engsitzend umschließt und die Durchgangsbohrung 1 über den gesamten Querverschiebebereich des Befestigungselements 5 vollflächig abdeckt. In dieser Position ist das Befestigungselement 5 durch die Anlage des Flanschabschnitts 8 an der Bauteilrückseite 9 einerseits und durch die Schnapphakenverbindung mit der Sicherungsscheibe 11 an der Bauteilvorderseite 12 andrerseits in Achsrichtung des Befestigungselements 5 lagefest und querschnittsbedingt auch winkelbegrenzt verdrehsicher, innerhalb eines zweidimensionalen, der Spaltgröße zwischen Durchgangsbohrung 1 und Schaftabschnitt 7 entsprechenden Toleranzfeldes aber quer zur Schaftachse gleitend verschieblich am Faserverbundbauteil 2 fixiert.

Um den Befestigungssatz zu komplettieren, wird das Schraubelement 3 in die Gewindebohrung 6 eingedreht, und dabei lässt sich die Achslage des Schraubelements 3 bezüglich des Faserverbundbauteils 2 in Querrichtung innerhalb des Toleranzbereiches korrigieren, bis das Schraubelement 3 endgültig festgezogen und so das Befestigungselement 5 unter der dadurch erzielten Reibschlusswirkung zwischen Flanschabschnitt 8 und Bauteilrückseite 9 lagefest mit dem Faserverbundbauteil 2 verspannt ist.

Fig. 2 zeigt den Befestigungssatz in einer der Fig. 1b entsprechenden Darstellung und gekennzeichnet durch die gleichen Bezugszeichen in einer modifizierten Querschnittskonfiguration mit einer einseitig erweiterten Durchgangsbohrung 1 und einem dementsprechend eindimensionalem Toleranzbereich, in welchem die Achslage des Befestigungselements 5 in Pfeilrichtung P veränderlich einstellbar ist. In diesem Fall sind die Schnapphaken 10 am oberen Schaftende nur an den in Verschieberichtung P verlaufenden Rändern angeformt und unmittelbar, also ohne Zwischenlage einer Sicherungsscheibe 11, mit den angrenzenden Seitenrändern der Durchgangsbohrung 1 gleitfähig verrastet. Im Übrigen ist die Bau- und Funktionsweise die gleiche wie bei dem oben beschriebenen Ausführungsbeispiel.

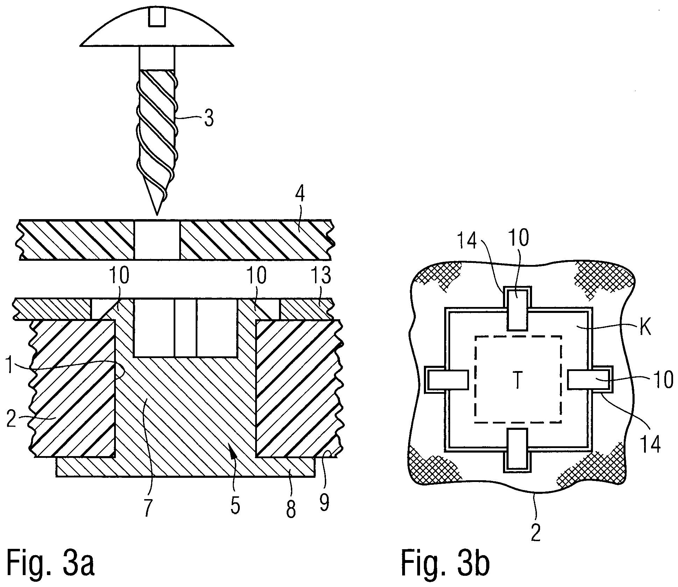

Fig. 3 zeigt - unter Verwendung gleicher Bezugszeichen - eine zweite Variante der Erfindung mit einem selbstschneidenden Schraubelement 3 und einem Befestigungselement 5, welches aus einem für die selbstschneidende Verschraubung geeigneten Kunststoff besteht und einen nicht-vorgelochten Schaftabschnitt 7 enthält. Aus Gründen einer Verdrehsicherheit besitzen die Durchgangsbohrung 1 und der Schaftabschnitt 7 wiederum einen nicht-kreisförmigen, also etwa, wie gezeigt, quadratischen Querschnitt, aber anders als bei der ersten Erfindungsvariante eine im Wesentlichen gleich große Querschnittsgeometrie, so dass das Befestigungselement 5 nahezu spielfrei in die Durchgangsbohrung 1 einführbar ist und in dieser dann gleichfalls durch Schnapphaken 10 gesichert wird, welche im festgezogenen Zustand der Verschraubung gegen eine Quetschwirkung seitens des Gegenbauteils 4 entweder durch eine zwischen die Bauteile 2, 4 eingelegte Distanzscheibe 13 (Fig. 3a) oder dadurch geschützt werden, dass sie in entsprechend vertiefte Ausparungen 14 des Faserverbundbauteils 2 eingreifen.

Bei dieser Ausführungsform wird eine quer zu Längsachse des Befestigungselements 5 variable Verschraubung dadurch ermöglicht, dass die Querschnittsgröße des Schaftabschnitts 7 zumindest in einer oder, wie gemäß Fig. 3b, in beiden Richtungen zusätzlich zu einer für eine sichere Verschraubung benötigten Randzone R um ein Vielfaches, vorzugsweise zumindest das Doppelte größer als der Schraubendurchmesser bemessen ist, so dass ein gemäß Fig. 3b zweidimensionales, gestrichelt umgrenztes Toleranzfeld T entsteht, innerhalb dessen sich das Schraubelement 3 zum Ausgleich von Positionsfehlern an einer beliebigen Stelle mit dem Befestigungselement 5 verschrauben lässt. Im Übrigen ist die Bau- und Funktionsweise dieses Befestigungssatzes die gleiche wie bei den ersten Ausführungsbeispielen.

## Patentansprüche

1. Befestigungssatz in Verbindung mit einem Faserverbundbauteil (2), mit einem Befestigungselement (5), bestehend aus einem in eine Durchgangsbohrung (1) des Faserverbundbauteils eingeführten Schaft (7) und einem auf der Bauteilrückseite (9) erweiterten Flansch (8), sowie mit einem von der Bauteilvorderseite aus mit dem Schaft verbindbaren Schraubelement (3),
**dadurch gekennzeichnet, dass**
das Befestigungselement (5) an dem dem Flansch (8) abgewandten Schaftende derart gleitfähig an der Bauteilvorderseite (12) abgestützt und die Querschnittsgeometrie des Schaftes (7) und der Durchgangsbohrung (1) des Faserverbundbauteils so konfiguriert ist, dass das Befestigungselement (5) im vormontierten Zustand innerhalb eines zweidimensionalen Toleranzfeldes quer zur Schaftachse begrenzt verschieblich, um die Schaftachse jedoch rotationsgesichert in der Bauteilbohrung positionierbar und im festgezogenen Zustand des Schraubelements (3) in der Position innerhalb des Toleranzfeldes fest mit dem Faserverbundbauteil (2) verspannt ist.

2. Befestigungssatz nach Anspruch 1, **dadurch gekennzeichnet dass**
das Befestigungselement (5) über elastisch verformbare, im Bereich der Durchgangsbohrung (1) mit der Bauteilvorderseite (12) zusammenwirkende Schnapphaken (10) verschieblich an dem Faserverbundbauteil (2) vormontiert ist.

3. Befestigungssatz nach Anspruch 2, **dadurch gekennzeichnet, dass**
die Schnapphaken (10) unter Zwischenlage einer diese, engsitzend umschließenden Sicherungsscheibe (11) gleitend mit den Randflächen der Durchgangsbohrung (1) zusammenwirken.

4. Befestigungssatz, welcher in der Durchgangsbohrung (1) eines Faserverbundbauteils (2) montierbar ist und ein Befestigungselement (5) enthält, bestehend aus einem in die Durchgangsbohrung (1) des Faserverbundbauteils einführbaren Schaft (7) und einem auf der Bauteilrückseite (9) erweiterten Flansch (8), sowie mit einem von der Bauteilvorderseite aus mit dem Schaft verbindbaren Schraubelement (3), **dadurch gekennzeichnet, dass** das Befestigungselement (5) in einem ungelochten Schaftabschnitt (7) aus einem auf ein selbstschneidendes Schraubelement (3) abgestimmten Material besteht und der Schaftabschnitt (7) im Querschnitt so groß bemessen ist, dass das selbstschneidende Schraubelement (3) in einem ein Vielfaches des Schraubendurchmessers übersteigenden Toleranzbereich (T) mit dem Schaftabschnitt lastfest verbindbar ist.

5. Befestigungssatz nach Anspruch 4, **dadurch gekennzeichnet, dass**
der Schaftabschnitt (7) an dem dem Flansch (8) abgewandten Ende mit elastisch verformbaren, beim Einführen des Befestigungselements (5) in das Faserverbundbauteil (2) mit diesem an der Bauteilvorderseite formschlüssig verrasteten Schnapphaken (10) versehen ist.

6. Befestigungssatz nach Anspruch 4 oder 5, **dadurch gekennzeichnet, dass**
der Schaftabschnitt (7) formschlüssig verdrehsicher in der Durchgangsbohrung (1) des Faserverbundbauteils (2) angeordnet ist.

7. Befestigungssatz nach einem der vorhergehenden Ansprüche, **dadurch gekennzeichnet, dass**
das Befestigungselement (5) mit dem Flansch- und dem Schaftabschnitt (7, 8) einschließlich der fakultativ vorhandenen Schnapphaken (10) einstückig aus Kunststoff hergestellt ist.

## Claims

1. A fastening set in conjunction with a fibre composite component (2), with a fastening element (5), comprising a shank (7) introduced into a through-bore (1) of the fibre composite component and a flange (8) which is widened on the rear side (9) of the component, and with a screwing element (3) which can be connected to the shank from the front side of the component, **characterised in that**
the fastening element (5), on that shank end which is remote from the flange (8), is supported slidably on the front side (12) of the component such, and the cross-sectional geometry of the shank (7) and of the through-bore (1) of the fibre composite component is configured such, that the fastening element (5) in the pre-mounted state can be positioned in a limitedly displaceable manner transversely to the shank axis within a two-dimensional tolerance field, but secured against rotation about the shank axis in the component bore, and in the tightened state of the screwing element (3) is braced tightly in the position within the tolerance field with the fibre composite component (2).

2. A fastening set according to Claim 1, **characterised in that**
the fastening element (5) is pre-mounted in displaceable manner on the fibre composite component (2) by way of elastically deformable snap hooks (10) which in the region of the through-bore (1) cooperate with the front side (12) of the component.

3. A fastening set according to Claim 2, **characterised in that**
the snap hooks (10), with the interposition of a securing disc (11) which tightly surrounds them, cooperate slidingly with the edge faces of the through-bore (1).

4. A fastening set which can be mounted in the through-bore (1) of a fibre composite component (2) and contains a fastening element (5), comprising a shank (7) which can be introduced into the through-bore (1) of the fibre composite component and a flange (8) which is widened on the rear side (9) of the component, and with a screwing element (3) which can be connected to the shank from the front side of the component, **characterised in that**
the fastening element (5) in an unperforated shank portion (7) comprises a material matched to a self-tapping screwing element (3), and the shank portion (7) in cross-section is of such dimensions that the self-tapping screwing element (3) can be connected in load-secured manner to the shank portion in a range of tolerances (T) which exceeds a multiple of the screw diameter.

5. A fastening set according to Claim 4, **characterised in that**
the shank portion (7) on that end which is remote from the flange (8) is provided with elastically deformable snap hooks (10) which upon introduction of the fastening element (5) into the fibre composite component (2) are latched in positive manner therewith on the front side of the component.

6. A fastening set according to Claim 4 or Claim 5, **characterised in that**
the shank portion (7) is arranged in positive manner in a manner resistant to turning in the through-bore (1) of the fibre composite component (2).

7. A fastening set according to one of the preceding claims, **characterised in that**
the fastening element (5) with the flange portion and the shank portion (7, 8) including the snap hooks (10) which may optionally be present is produced in one piece from plastics material.

## Revendications

1. Ensemble de fixation en combinaison avec un composite renforcé par des fibres (2) comprenant un élément de fixation (5) constitué par une tige (7) introduite dans un perçage traversant (1) du composite renforcé par des fibres et une bride (8) s'élargissant sur le côté arrière (9) de cet élément, ainsi qu'un élément de vis (3) pouvant être relié à la tige à partir du côté avant de cet élément,
**caractérisé en ce que**
l'élément de fixation (5) s'appuie sur le côté avant (12) du composite en pouvant glisser par l'extrémité de la tige située à l'opposé de la bride (8) et la géométrie de la section de la tige (7) et du perçage traversant (1) du composite renforcé par des fibres est agencée de sorte que, à l'état très monté, l'élément de fixation (5) puisse être positionné dans le perçage du composite de façon à pouvoir être déplacé par translation dans un champ de tolérance bidimensionnel limité transversalement à l'axe de la tige autour de l'axe de celle-ci mais toutefois à être bloqué en rotation, et que à l'état serré de l'élément de vis (3) l'élément de fixation soit bloqué en position à l'intérieur du champ de tolérance solidairement au composite renforcé par des fibres (2).

2. Ensemble de fixation conforme à la revendication 1,
**caractérisé en ce que**
l'élément de fixation (5) est préalablement monté sur le composite renforcé par des fibres (2) en étant mobile en translation par l'intermédiaire de crochets d'encliquetage (10) élastiquement déformables coopérant avec le côté avant (12) du composite dans la zone du perçage traversant (1).

3. Ensemble de fixation conforme à la revendication 2,
**caractérisé en ce que**
les crochets d'encliquetage (10) coopèrent avec les surfaces de bord du perçage traversant (1) en pouvant glisser avec interposition d'une rondelle de blocage (11) entourant étroitement celle-ci.

4. Ensemble de fixation pouvant être monté dans le perçage traversant (1) d'un composite renforcé par des fibres (2) et comprenant un élément de fixation (5) constitué d'une tige (7) pouvant être insérée dans le perçage traversant (1) du composite renforcé par des fibres et une bride (8) s'étendant sur le côté arrière du composite (9), ainsi qu'un élément de vis (3) pouvant être relié à la tige à partir du côté avant du composite,
**caractérisé en ce que**
l'élément de fixation (5) est constitué, dans un segment (7) non percé de la tige d'un matériau adapté à un élément de vis autotaraudeur (3), et le segment de tige (7) a une section dont la dimension est telle que l'élément de vis autotaraudeur (3) puisse être relié sans charge au segment de tige dans une plage de tolérance (T) dépassant un multiple du diamètre de la vis.

5. Ensemble de fixation conforme à la revendication 4,
**caractérisé en ce que**
le segment de tige (7) est équipé à son extrémité opposée à la bride (8) de crochets d'encliquetage (10) élastiquement déformables, s'accrochant par une liaison par la forme, lors de l'insertion de l'élément de fixation (5) dans le composite renforcé par des fibres (2), sur le côté avant de celui-ci.

6. Ensemble de fixation conforme à la revendication 4 ou 5,
**caractérisé en ce que**
le segment de tige (7) est positionné en étant bloqué en rotation par une liaison par la forme dans le perçage traversant (1) du composite (2) renforcé par des fibres.

7. Ensemble de fixation conforme à l'une des revendications précédentes,
**caractérisé en ce que**
l'élément de fixation (5) est réalisé, avec le segment de bride et le segment de tige (7, 8), y compris les crochets d'encliquetage, le cas échéant présents (10) en une seule pièce en matériau synthétique.
